(19) **Europäisches Patentamt**

**European Patent Office**

**Office européen des brevets**

(11) **EP 1 426 790 A1**

(12) **EUROPEAN PATENT APPLICATION**

(43) Date of publication:
**09.06.2004 Bulletin 2004/24**

(51) Int Cl.⁷: **G02B 6/00**

(21) Application number: **03027946.7**

(22) Date of filing: **04.12.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | • **Isogai, Fumikazu** **Kariya-shi Aichi-ken (JP)** • **Mita, Yasuya** **Kariya-shi Aichi-ken (JP)** • **Niida, Eiki** **Kariya-shi Aichi-ken (JP)** |
| (30) Priority: **05.12.2002 JP 2002353296** **09.06.2003 JP 2003164238** | (74) Representative: **Leson, Thomas Johannes Alois, Dipl.-Ing. Tiedtke-Bühling-Kinne & Partner GbR, TBK-Patent, Bavariaring 4 80336 München (DE)** |
| (71) Applicant: **Kabushiki Kaisha Toyota Jidoshokki Kariya-shi, Aichi-ken (JP)** | |
| (72) Inventors: • **Takeuchi, Norihito** **Kariya-shi Aichi-ken (JP)** | |

(54) **Optical element, planar lighting unit and liquid crystal display unit**

(57)    An optical element gathers light emitted from a planar luminous element (4,5) having isotropic light emitting characteristics. The optical element (4,5) includes an incidence plane (6) and a plurality of protrusions (7). The incidence plane (6) is formed on one side of the optical element for permitting the light to enter the optical element and faces the planar luminous element (4,5). The protrusions (7) are formed on the other side of the optical element and each protrusion (7) has a shape of a frustum.

# FIG. 1A

EP 1 426 790 A1

# EP 1 426 790 A1

**Description**

BACKGROUND OF THE INVENTION

The present invention relates to an optical element, and also relates to a planar lighting unit, a planar luminous unit and a liquid crystal display unit each having the optical element. The present invention relates more particularly to the optical element enhancing front brightness.

In recent years, a liquid crystal display unit has been applied to a personal computer and a handheld terminal. The liquid crystal display unit includes a liquid crystal panel in which a pair of electrodes is placed between two glass substrates and in which liquid crystal is placed between the electrodes. When a voltage is applied between the electrodes, the liquid crystal panel varies orientation of the liquid crystal and thereby displays a character or an image.

However, since the liquid crystal itself does not emit light, it is hard to see the displayed character and image especially in a dark place. Therefore, in a normal liquid crystal display unit, a lighting unit is prepared on the backside of the liquid crystal panel. The light emitted from the lighting unit reaches a user's eyes through the liquid crystal panel and thereby the character or the image on the liquid crystal panel is illuminated. Thus, the lighting unit, which is placed on the backside of the liquid crystal, or an opposite side to a screen side of the liquid crystal panel, is called a backlight.

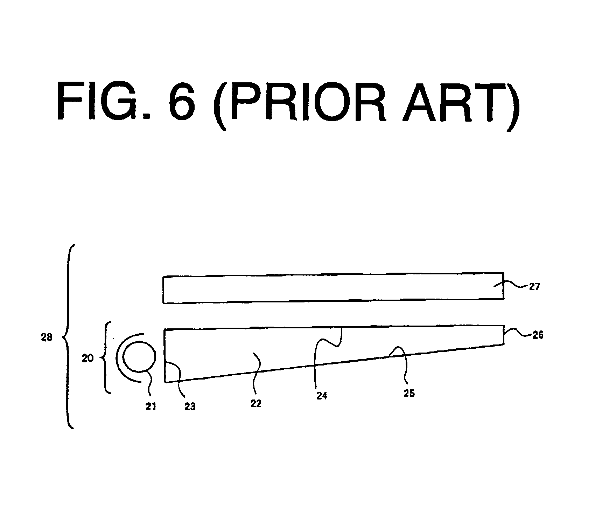

Referring to FIG. 6, a backlight 20 includes a cold cathode tube 21 and a light guiding plate 22. The cold cathode tube 21 is a linear luminous element. The light guiding plate 22 spreads the light emitted from the linear luminous element to form planar light and the planar light exits from the light guiding plate 22 toward a liquid crystal panel 27. The liquid crystal panel 27 and the backlight 20 constitute a liquid crystal display unit 28. The light guiding plate 22 includes a light admission plane 23, an exit plane 24, a reflection plane 25 and an end plane 26. The liquid crystal panel 27 faces the exit plane 24 of the light guiding plate 22.

Specifically, the light emitted from the cold cathode tube 21 enters the light guiding plate 22 through the light admission plane 23. The light travels toward the end plane 26 that faces the light admission plane 23 while repeating total reflection on the exit plane 24 and the reflection plane 25 by turns. The reflection plane 25 is uneven in shape. The reflection plane 25 also includes a light guiding part for guiding the light toward the end plane 26 and a light reflecting part for reflecting the light toward the exit plane 24. Therefore, when the light that enters the light guiding plate 22 through the light admission plane 23 reaches the light reflecting part of the reflection plane 25, the light is reflected toward the exit plane 24 by the light reflecting part of the reflection plane 25 and exits from the light guiding plate 22 toward the liquid crystal panel 27 through the exit plane 24. On the other hand, the light, which reaches the light guiding part of the reflection plane 25, is totally reflected and guided toward the end plane 26, which faces the light admission plane 23, or the light admission plane 23. When the light, which is guided toward the end plane 26 or the light admission plane 23, reaches the light reflecting part of the reflection plane 25, the light is reflected toward the exit plane 24 and exits from the light guiding plate 22 toward the liquid crystal panel 27 through the exit plane 24.

In the liquid crystal display unit 28, the display is in many cases seen from the front thereof. Therefore, in the backlight, it is desired that brightness in the front direction, or front brightness, is maximized. "Front brightness" means brightness in a perpendicular direction to a screen of the liquid crystal display unit.

When the light guiding plate 22 changes the light emitted from the cold cathode tube 21, which serves as a linear luminous unit, into planar light and when the planar light exits from the light guiding plate 22, the light exiting from the light guiding plate 22 includes every light whose incidence angle is equal to or less than the critical angle determined by the refractive index of the light guiding plate 22 and the refractive index of air. Therefore, the light does not necessarily travel perpendicular to the exit plane 24. Practically, the light traveling substantially perpendicular to the exit plane 24 is a small portion of the total light that exits from the exit plane 24 of the light guiding plate 22. Note that the luminous unit merely emits light while the lighting unit emits light, reflects the light or refracts the light.

In order to enhance the front brightness, it is proposed to place a brightness enhancement film, which serves as an optical element, between the light guiding plate and the liquid crystal panel.

Japanese Unexamined Patent Publication No. 2002-107515 discloses a luminous unit in which a prism sheet is placed on a light guiding plate. A prism sheet is generally formed in such a manner that a plurality of prismatic portions is placed parallel with each other on a flat surface. In the above-mentioned prior art, the prism sheet is formed in such a manner that a protruding portion of each prismatic portion has a planar shape at its distal end and that is substantially parallel to the screen. Thereby, the prism sheet has a trapezoidal shape in a cross-section. Each prismatic portion is placed parallel to the cold cathode fluorescent light "CCFL" that serves as a light source.

The CCFL is a linear light source and the light exiting from the light guiding plate continuously exists in a plane perpendicular to the CCFL. Therefore, in order for the exiting light to travel substantially perpendicular to the exit plane, each prismatic portion is only formed parallel with the CCFL

In recent years, an organic electroluminescent element (hereinafter referred to an organic EL element) has been progressively developed and the application of the organic EL element to a backlight of a liquid crystal display unit is proposed. The organic EL element for use in the backlight is formed in such a manner that a luminous part, or an organic luminous layer, is continuously placed in a planar shape. Thereby, the light guiding plate is no longer needed and a thin display unit results.

Also, when the organic EL element that serves as a planar luminous element is used for the backlight, the enhancement of the front brightness of the backlight is required. Therefore, the use of the brightness enhancement film is proposed similarly to the use of the linear luminous element and the light guiding plate.

The light emitted from the planar organic EL element, however, has isotropic light emitting characteristics unlike the light exiting from the linear luminous element through the light guiding plate. The isotropic light emitting characteristics relates to brightness of exiting light and means that the brightness in a direction of the exiting light is dependent only on an angle between the direction and the normal line of the exit plane of the light, or an angle of inclination, and is independent of azimuth of an element that is defined by orthografically projecting the direction on the exit plane.

If the brightness enhancement film has a similar shape to the brightness enhancement film for use in the above-mentioned Publication No. 2002-107515, the light that travels in a perpendicular direction to the longitudinal direction of the prism is refracted perpendicular to the exit plane. The light that travels in a parallel direction to the longitudinal direction of the prism is, however, not refracted. Consequently, the brightness enhancement film does not effectively enhance brightness.

SUMMARY OF THE INVENTION

The present invention is directed to an optical element that effectively enhances brightness of a planar luminous element having isotropic light emitting characteristics, and is also directed to a planar lighting unit, a planar luminous unit and a liquid crystal display unit each having the optical element.

The present invention has a following feature. An optical element gathers light emitted from a planar luminous element having isotropic light emitting characteristics. The optical element includes an incidence plane and a plurality of protrusions. The incidence plane is formed on one side of the optical element for permitting the light to enter the optical element. The incidence plane faces the planar luminous element. The protrusions are formed on the other side of the optical element and each protrusion has a shape of a frustum.

The present invention also has another feature. A planar lighting unit includes a planar luminous element and an optical element. The planar luminous element has an exit plane from which light isotropically exits. The optical element is placed on the exit plane for gathering the light. The optical element includes an incidence plane and a plurality of protrusions. The incidence plane is formed on one side of the optical element for permitting the light to enter the optical element. The incidence plane faces the planar luminous element. The protrusions are formed on the other side of the optical element and each protrusion has a shape of a frustum.

The present invention also has yet another feature. A planer luminous unit includes a planar luminous element and an optical element. The planar luminous element has an exit plane from which light isotropically exits. The optical element is placed on the exit plane for gathering the light. The optical element includes an incidence plane and a plurality of protrusions. The incidence plane is formed on one side of the optical element for permitting the light to enter the optical element. The incidence plane faces the planar luminous element. The protrusions are formed on the other side of the optical element. Each protrusion has a shape of a frustum.

The present invention also has yet another feature. A liquid crystal display unit includes a backlight and a liquid crystal panel. The backlight includes a planar luminous element and an optical element. The planar luminous element has an exit plane from which light isotropically exits. The optical element is placed on the exit plane for gathering the light. The optical element includes an incidence plane and a plurality of protrusions. The incidence plane is formed on one side of the optical element for permitting the light to enter the optical element. The incidence plane faces the planar luminous element. The protrusions are formed on the other side of the optical element. Each protrusion has a shape of a frustum. The liquid crystal panel, through which the light reaches a user's eyes, is placed near the protrusions.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:

FIG. 1A is a schematic view in a cross-section illustrating a liquid crystal display unit according to a first preferred embodiment of the present invention;

FIG. 1 B is an enlarged top view illustrating a brightness enhancement film of the liquid crystal display unit according to the first preferred embodiment of the present invention;

FIG. 1C is an enlarged cross-sectional view illustrating the brightness enhancement film of the liquid crystal display unit according to the first preferred embodiment of the present invention;

FIG. 2 is an enlarged cross-sectional view illustrating the liquid crystal display unit according to the first preferred embodiment of the present invention;

FIG. 3 is an enlarged top view illustrating a brightness enhancement film of a liquid crystal display unit according to a second preferred embodiment of the present invention;

FIG. 4 is an enlarged top view illustrating a brightness enhancement film of a liquid crystal display unit according to another preferred embodiment of the present invention;

FIG. 5 is an enlarged top view illustrating a brightness enhancement film of a liquid crystal display unit according to a third preferred embodiment of the present invention; and

FIG. 6 is a schematic view in a cross-section illustrating a prior art liquid crystal display unit.

DETAILED DESCRIPTION OF THE PREFERRED EMBODIMENTS

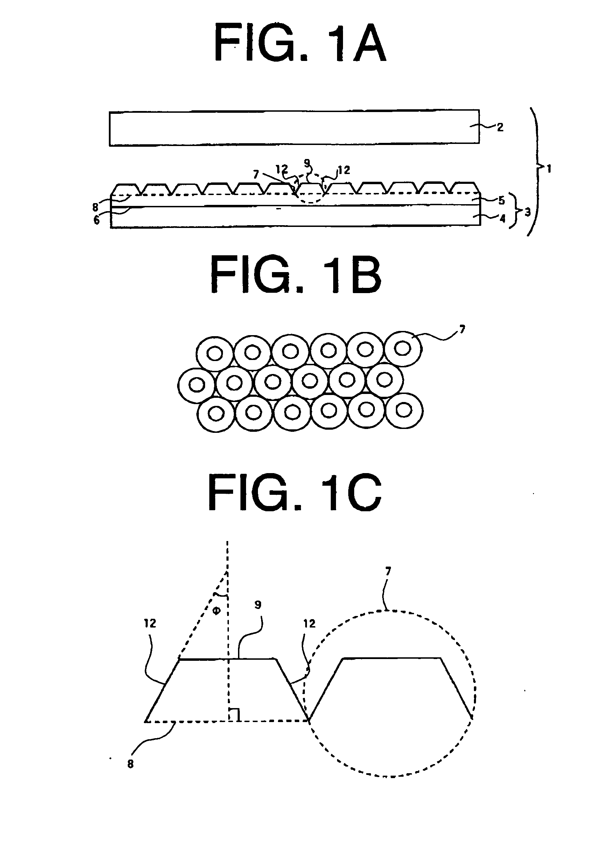

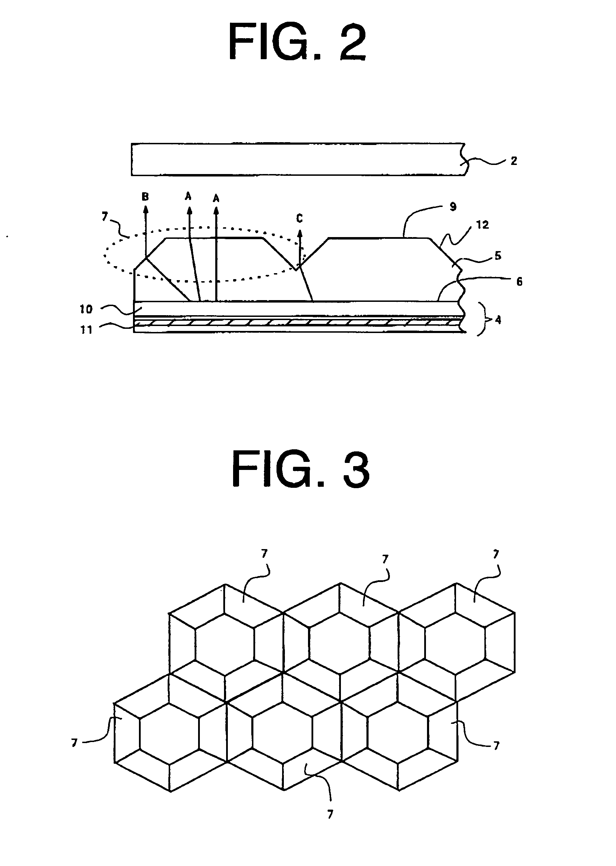

A liquid crystal display unit according to a first preferred embodiment of the present invention will be described with reference to FIGS. 1 A, 1B, 1 C and 2. In the first embodiment, a transmission type liquid crystal display unit 1 is adopted as the liquid crystal display unit.

As shown in FIG. 1A, the liquid crystal display unit 1 includes a liquid crystal panel 2 and a backlight 3. In the liquid crystal panel 2, a plurality of pixels each having one of red, blue and green filters is placed so as to form a matrix. Thereby, the liquid crystal panel 2 displays a character or an image.

Still referring to FIG. 1A, the backlight 3 includes an organic electroluminescent element 4 (hereinafter referred to as an organic EL element 4) and a brightness enhancement film 5. The organic EL element 4 serves a planar luminous element and the brightness enhancement film 5 serves as an optical element.

The organic EL element 4 is formed by layering in turn a transparent electrode, an organic layer and a metallic electrode on a glass substrate. The transparent electrode is made of ITO (Indium Tin Oxide).

When a voltage is applied between the transparent electrode and the metallic electrode of the organic EL element 4, a luminous layer formed in the organic layer emits light. In the present embodiment, the luminous layer is constituted in such a manner that luminescent color is white. The light emitted from the luminous layer exits outside the organic EL element 4 through the glass substrate.

In the present embodiment, the organic EL element 4 is formed in such a manner that both of the electrodes and the organic layer, which is made of organic compound, each becomes plane in shape. When a voltage is applied between the electrodes, an identical colored light is simultaneously emitted in every spot of the luminous layer. Thus, in the present embodiment, the organic EL element 4 is the planar luminous element.

The brightness enhancement film 5 is made of transparent resin and has a flat plane on one side that serves as an incidence plane 6. The incidence plane 6 permits the light to enter the brightness enhancement film 5. In the present embodiment, an angle between incident light and the normal direction of the incidence plane 6 is defined as an incidence angle. The brightness enhancement film 5 has a facing plane 8 on the other side and faces the liquid crystal panel 2. A plurality of protrusions 7 extends from the facing plane 8. The incidence plane 6 closely contacts with the glass substrate of the organic EL element 4. That is, the incidence plane 6 is placed so as to face the planar luminous element.

The protrusions 7, which extend from the facing plane 8, each have a shape of a conical frustum. A basal plane of each protrusion 7 is placed in an identical plane. That is, the basal plane of each protrusion 7 is placed in the facing plane 8. The facing plane 8 is parallel to the incidence plane 6.

Referring to FIG. 1B, all the protrusions 7 have an identical shape and are placed in such a manner that one optional protrusion 7 is surrounded by six other protrusions 7 in the facing plane 8.

Referring to FIG. 1 C, each protrusion 7 has a top plane 9 that is a distal end surface thereof and that is parallel to the facing plane 8. The area ratio of the top plane 9 of each protrusion 7 to the corresponding basal plane thereof is 25 percent (%). Among the straight lines that link the circumference of the basal plane and the circumference of the top plane, the shortest straight line is called an oblique line. A straight line that passes through the center of the basal plane perpendicular to the facing plane 8 (therefore, that is also perpendicular to the incidence plane 6) is called a perpendicular line. In this case, an angle of $\phi$ between the oblique line and the perpendicular line is 12.5°.

The operation of the liquid crystal display unit 1 is now described with reference to FIG. 2.

When a voltage is applied between an anode and a cathode of the organic EL element 4, the organic EL element 4 emits light. Thereby, white colored light exits from a glass substrate 10.

A luminous layer 11 of the organic EL element 4 is formed in a plane shape. It can be considered that a large number of luminous points are continuously placed so as to form the plane luminous layer 11. The light emitted from each luminous point is uniformly emitted in every direction around the luminous point. A part of the light, which is emitted from the luminous points, directly travels toward the glass substrate 10 while other part of the light travels toward the glass substrate 10 after reflected by the metallic electrode. Since such luminous points are continuously placed in a plane shape, light exits from the glass substrate 10 in every direction within the plane defined by the glass substrate 10.

In such an organic EL element 4 where the luminous points are continuously placed in a plane shape, as a whole, specifically in the organic EL element 4 other than a marginal part thereof, brightness $I(\theta)$ of light in a direction of the organic EL element 4 that forms an angle (or an angle of inclination) of $\theta$ with a normal line of the glass substrate 10 is in many cases expressed from optical quality of constituent elements of the organic EL element 4 as follows.

$$I(\theta) = I_0 \cos^{1/4}\theta \tag{1}$$

Where $I_0$ is brightness in the normal direction of the glass substrate 10. The brightness $I(\theta)$ is approximated by the equation (1), provided that differential between an actual measurement of the brightness and a value found by the equation (1) is within 20 % of the value found by the equation (1) when the angle of inclination $\theta$ ranges from 0° to 80° inclusive of 0° and 80°. Therefore, brightness in a direction of the organic EL element 4 is dependent only on the angle of inclination and is independent of an azimuth. That is, the organic EL element 4 has isotropic light emitting characteristics.

Also, it is understood from the equation (1) that brightness of light exiting from the organic EL element 4 is relatively high even in a direction that is inclined from the normal direction of an exit plane from which the light exits. That is, the direction of light exiting from the organic EL element 4 is distributed over a wide range of angles relative to the plane of the glass substrate 10. In the direction of the exiting light, rate of the light exiting in the normal direction of the glass substrate 10 is relatively low.

The aforementioned brightness enhancement film 5 is placed on the glass substrate 10 of such an organic EL element 4. In this state, a light path is now described. As shown in FIG. 2, light emitted from the luminous layer 11 enters the brightness enhancement film 5 through the glass substrate 10. In this case, the refractive index of the brightness enhancement film 5 is larger than that of air. Also, the brightness enhancement film 5 closely contacts with the glass substrate10 on the incidence plane 6 thereof. Therefore, it is possible that the light, which is totally reflected within the glass substrate 10 at the interface between the glass substrate 10 and air, enters the brightness enhancement film 5 at the interface between the glass substrate 10 and the brightness enhancement film 5.

When the top plane 9 of the protrusion 7 is projected on the incidence plane 6 of the brightness enhancement film 5, a projection plane of the top plane 9, or a first projection plane, is defined. The light that enters the first projection plane from the organic EL element 4 and that travels substantially perpendicular to the incidence plane 6, as indicated by an arrow A in FIG. 2, directly passes through the top plane 9 of the protrusion 7 and exits from the brightness enhancement film 5. In this case, the light is hardly refracted. Therefore, the light that exits in a substantially perpendicular direction to the incidence plane 6 of the brightness enhancement film 5 from the organic EL element 4 passes through the brightness enhancement film 5 in the substantially perpendicular direction to the incidence plane 6 of the brightness enhancement film 5.

Thus, the top plane 9 of the protrusion 7 in the shape of a conical frustum is formed in such a manner that the light, which is emitted from the organic EL element, travels in the substantially perpendicular direction to the first projection plane or the incidence plane 6, and passes through the top plane 9 with very little directional change. In this regard, the protrusion 7 in the shape of the conical frustum has different operation and effect from the protrusion in the shape of a quadrangularly pyramidal frustum formed in an exit light controlling plate, which is described in Japanese Unexamined Patent Publication No. 2000-148032.

The light that enters the first projection plane from the organic EL element 4 with a certain degree of angle relative to the perpendicular direction to the exit plane of the organic EL element, as indicated by an arrow B in FIG. 2, reaches an oblique surface 12 of the protrusion 7 formed in the brightness enhancement film 5. Note that the oblique surface 12 is a surface that links the top plane 9 and the basal plane of the protrusion 7 in the shape of the conical frustum together. Such light is refracted on the oblique surface 12 so as to approach the perpendicular direction of the incidence plane 6 of the brightness enhancement film 5. That is, the light that enters the incidence plane 6 of the brightness enhancement film 5 with a certain degree of angle relative to the incidence plane 6 is gathered on the oblique surface 12 of the protrusion 7 formed in the brightness enhancement film 5 so as to approach the perpendicular direction of the incidence plane 6. Since the protrusion 7 is formed in the shape of a conical frustum, equal effect is achieved for the light in every direction within the incidence plane.

When the oblique surface 12 of the protrusion 7 is projected on the incidence plane 6 of the brightness enhancement film 5, a projection plane of the oblique surface 12, or a second projection plane, is defined. The amount of light that enters the second projection plane from the organic EL element 4 and that directly passes through the protrusion 7 becomes small, compared to the amount of light that enters the first projection plane from the organic EL element 4 and that directly passes through the protrusion 7. The light that enters the second projection plane from the organic EL element 4 and that directly passes through the protrusion 7, as indicated by an arrow C in FIG. 2, refracts through the oblique surface 12 of the protrusion 7 that is inclined relative to the incidence plane 6 of the brightness enhancement film 5 so as to approach the perpendicular direction of the incidence plane 6.

When the organic EL element of which brightness I(θ) is expressed by the equation (1) is adopted as a light source, the relationship between an area ratio of the top plane 9 of the protrusion 7 to the basal plane thereof and a relative value of the front brightness of the organic EL element is simulated on a computer using a ray tracking method. The relative value of the front brightness stands for a ratio of the front brightness in a state that the brightness enhancement film 5 is used to the front brightness in the normal direction of the incidence plane 6 in a state that the brightness enhancement film 5 is not used. The result from the simulation is shown in TABLE 1. In the simulation, an angle between the normal line of the incidence plane 6 of the brightness enhancement film 5 and the oblique line of the protrusion 7 is set to 12.5°.

TABLE 1

| AREA RATIO | RELATIVE VALUE OF FRONT BRIGHTNESS |
|---|---|
| 0% | 1.465 |
| 1% | 1.473 |
| 10% | 1.524 |
| 20% | 1.622 |
| 25% | 1.661 |
| 30% | 1.617 |
| 40% | 1.529 |
| 46% | 1.476 |
| 60% | 1.353 |
| 80% | 1.081 |
| 100% | 1.000 |

From TABLE 1, it is understood that the front brightness is enhanced when the area ratio of the top plane 9 of the protrusion 7 to the basal plane thereof ranges from 1% to 46% inclusive of 1% and 46%, compared to the case that the protrusion 7 is in a conical shape in which the area ratio is 0%. The effect of the protrusion 7 is further enhanced when the area ratio ranges from 20% to 30% inclusive of 20% and 30%.

The relative value of the front brightness is also dependent on an angle between the normal line of the incidence plane 6 and the oblique line of the protrusion 7.

When the organic EL element of which brightness I(θ) is expressed by the equation (1) is adopted as a light source, the relationship between an angle of ϕ at which the normal line of the incidence plane 6 crosses the oblique line of the protrusion 7 and the relative value of the front brightness is simulated on a computer using a ray tracking method. The result from the simulation is shown in TABLE 2. In the simulation, the area ratio of the top plane 9 of the protrusion 7 of the brightness enhancement film 5 to the basal plane of the protrusion 7 is set to 25%.

TABLE 2

| ANGLE ϕ | RELATIVE VALUE OF FRONT BRIGHTNESS |
|---|---|
| 6° | 1.089 |
| 7.5° | 1.486 |

TABLE 2   (continued)

| ANGLE φ | RELATIVE VALUE OF FRONT BRIGHTNESS |
|---------|-----------------------------------|
| 10° | 1.636 |
| 12.5° | 1.661 |
| 15° | 1.652 |
| 20° | 1.594 |
| 27° | 1.473 |
| 30° | 1.421 |
| 40° | 1.255 |
| 50° | 1.039 |

From TABLE 2, it is understood that the front brightness is enhanced when an angle between the normal line of the incidence plane 6 and the oblique line of the protrusion 7 ranges from 7.5° to 27° inclusive of 7.5° and 27°, compared to the case that the protrusion 7 is in a conical shape. The effect of the protrusion 7 is further enhanced when an angle between the normal line of the incidence plane 6 and the oblique line of the protrusion 7 ranges from 10° to 15° inclusive of 10° and 15°.

In the present embodiment, the following advantageous effects are obtained.

(1) The brightness enhancement film is closely contacted with the glass substrate of the organic EL element. Therefore, a critical angle in the interface between the glass substrate and the brightness enhancement film becomes larger than a critical angle in interface between the glass substrate and air. Thereby, a part of the light that is totally refracted from the interface between the glass substrate and air and that does not exit from the glass substrate to air enters the brightness enhancement film. Therefore, among the light that is emitted from the organic EL element, a large amount of the light exits outside the organic EL element through the brightness enhancement film.

(2) The protrusion has a top plane that is parallel to the incidence plane. Therefore, the light that exits substantially in the perpendicular direction to the exit plane from the exit plane of the organic EL element does not refract through the protrusion and exits substantially in the perpendicular direction to the exit plane as it is. Thus, among the light that exits from the organic EL element which has a desired angle with the perpendicular direction to the exit plane, the amount of light whose direction is varied on the brightness enhancement film is reduced, compared to the brightness enhancement film having the protrusion formed in a conical shape or in a pyramidal shape.

(3) The protrusion has an oblique surface that is inclined relative to the incidence plane. Therefore, the light that has reached the oblique surface is refracted so as to approach the normal direction of the incidence plane. Thereby, the light that exits from the organic EL element with a certain degree of angle relative to the exit plane also approaches the perpendicular direction of the exit plane. Such light enhances front brightness.

(4) The protrusion has a shape of the conical frustum. Therefore, there is no directional property when gathering the light on the oblique surface. That is, even the light that reaches the oblique surface from any direction in the incidence plane equally refracts so as to approach the perpendicular direction to the incidence plane. Therefore, especially in the organic EL element that serves as a planar luminous element having an isotropic light emitting characteristics, the front brightness of the organic EL element is effectively enhanced.

(5) The brightness enhancement film having the protrusion in the shape of the conical frustum is closely contacted with the organic EL element in order to form a planar lighting unit. Therefore, the planar lighting unit whose front brightness is relatively high is obtained.

(6) The brightness enhancement film having protrusions in the shape of the conical frustum is closely contacted with the organic EL element in order to form a planar lighting unit, and the planar lighting unit is adopted as the backlight of the liquid crystal display unit. Therefore, the front brightness of the liquid crystal panel that constitutes the liquid crystal display unit is enhanced. Thereby, the liquid crystal display unit whose display is highly recognized in the front view of the display is obtained.

A liquid crystal display unit according to a second preferred embodiment of the present invention will now be described with reference to FIG. 3. In the second embodiment, the transmission type liquid crystal display unit 1 is also adopted as the liquid crystal display unit, and the protrusion 7 formed in the brightness enhancement film 5 is in the shape of a regular hexangularly pyramidal frustum whose basal plane has six sides. Also, in the second embodiment, only difference between the second embodiment and the first embodiment is described. The same reference numerals of the first embodiment are applied to the same or similar components in the second embodiment, and the overlapped description is omitted.

The protrusion 7 is formed in the shape of the regular hexangularly pyramidal frustum and is placed on the facing plane 8 in such a manner that one optional protrusion 7 is in contact with six other protrusions 7 around the optional protrusion 7. Therefore, the facing plane 8 is completely covered with the protrusions 7.

In the present embodiment, the above effects (1) through (3), (5) and (6) of the first embodiment are substantially obtained. In addition, the following advantageous effect is also obtained.

(7) The protrusion formed on the brightness enhancement film is in the shape of a regular hexangularly pyramidal frustum. Therefore, the facing plane of the brightness enhancement film is completely covered with the protrusion of an identical shape.

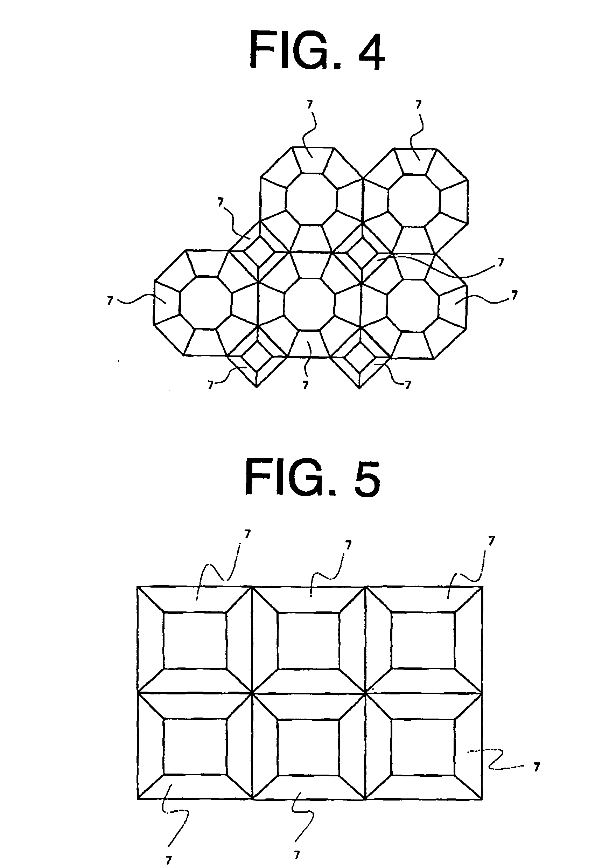

A liquid crystal display unit according to a third preferred embodiment of the present invention will now be described with reference to FIG. 5. In the third embodiment, the transmission type liquid crystal display unit 1 is also adopted as the liquid crystal display unit, and the protrusion 7 formed in the brightness enhancement film 5 is in the shape of a regular quadrangularly pyramidal frustum whose basal plane has four sides. Also, in the third embodiment, only difference between the third embodiment and the first embodiment is described. The same reference numerals of the first embodiment are applied to the same or similar components in the third embodiment, and the overlapped description is omitted.

In the present embedment, the facing plane of the brightness enhancement film is also completely covered with the protrusion of an identical shape.

In the present embodiment, the above effects (1) through (3) and (5) through (7) of the first and second embodiments are substantially obtained. In addition, the following advantageous effect is also obtained.

(8) In FIG. 5, the protrusion 7 is delimited by two pairs of grooves that cross at right angles to each other. Therefore, when the brightness enhancement film 5 is manufactured by cutting a surface of a planar film, the brightness enhancement film 5 is simply manufactured, compared to the case that the protrusion 7 is formed in another shape.

In the present invention, the following alternative embodiments are also practiced.

In the first embodiment, the protrusion is in the shape of the conical frustum. Also, in the second embodiment, the protrusion is in the shape of the regular hexangularly pyramidal frustum. The shape of the protrusion is not limited to the conical frustum and the regular hexangularly pyramidal frustum. In an alternative embodiment to the embodiments, the shape of the protrusion is a frustum other than the conical frustum and the regular hexangularly pyramidal frustum. When the protrusion is in the shape of the frustum, the similar effects of the first and second embodiments are substantially obtained.

In the second embodiment, the facing plane is completely covered with the protrusion in the shape of the regular hexangularly pyramidal frustum. Namely, the number of kinds of the shape is singular. However, the number of kinds of the shape is not limited to the singular. In an alternative embodiment to the second embodiment, the number of kinds of the shape is plural. For example, as shown in FIG. 4, the facing plane is completely covered with the protrusion in the shape of a regular octagularly pyramidal frustum and the protrusion in the shape of the regular quadrangularly pyramidal frustum. In this case, the similar effects of the second embodiment are substantially obtained.

In the first embodiment, the organic EL element is adopted as the planar luminous element having the isotropic light emitting characteristics. However, the planar luminous element is not limited to the organic EL element. In an alternative embodiment to the first embodiment, an inorganic EL element is adopted as the planar luminous element. In this case, the similar effects of the case that the organic EL element is used are substantially obtained.

In the first embodiment, the planar lighting unit which includes the organic EL element and the brightness enhancement film is adopted as the backlight of the liquid crystal display unit. However, the planar lighting unit is not limited to the backlight of the liquid crystal display unit. In an alternative embodiment to the first embodiment, the planar lighting unit is adopted as a lighting unit. In this case, the lighting unit serves as the planar lighting unit that is high in front brightness.

In the first embodiment, the luminous color of the organic EL element is white. However, the luminous color of the organic EL element is not limited to white. In an alternative embodiment to the first embodiment, any luminous color of the organic EL element will do.

In the first embodiment, the organic EL element emits light from a glass substrate side, and is called a bottom emission type. However, the organic EL element is not limited to the bottom emission type. In an alternative embodiment to the first embodiment, the organic EL element emits light from an opposite side to the glass substrate side, which is called a top emission type.

The organic EL element of the top emission type is formed in such a manner that a metallic electrode, an organic luminous layer and a transparent electrode are in turn layered on a substrate and that a transparent sealing member seals the transparent electrode. In this type of organic EL element, the light emitted from the luminous layer exits through the sealing member side.

When this type of organic EL element is used, the brightness enhancement film is placed so as to face the sealing member.

In the above-mentioned embodiments, the organic element is formed by layering in turn a transparent electrode, an organic layer and a metallic electrode on a glass substrate. However, the number of organic layer is not limited to one. In alternative embodiments to the above embodiments, the number of organic layer is more than one.

Therefore, the present examples and embodiments are to be considered as illustrative and not restrictive and the invention is not to be limited to the details given herein but may be modified within the scope of the appended claims.

An optical element gathers light emitted from a planar luminous element having isotropic light emitting characteristics. The optical element includes an incidence plane and a plurality of protrusions. The incidence plane is formed on one side of the optical element for permitting the light to enter the optical element and faces the planar luminous element. The protrusions are formed on the other side of the optical element and each protrusion has a shape of a frustum.

**Claims**

1. An optical element for gathering light emitted from a planar luminous element having isotropic light emitting characteristics, **characterized in that** an incidence plane is formed on one side of the optical element for permitting the light to enter the optical element, **in that** the incidence plane faces the planar luminous element, **in that** a plurality of protrusions is formed on the other side of the optical element, and **in that** each protrusion has a shape of a frustum.

2. The optical element according to claim 1, wherein each protrusion has a top plane and a basal plane, an area ratio of the top plane to the basal plane being ranged from 1% to 46% inclusive of 1% and 46%.

3. The optical element according to claim 2, wherein the area ratio is ranged from 20% to 30% inclusive of 20% and 30%.

4. The optical element according to claim 1, wherein each protrusion has a top surface, a basal plane and an oblique line, the top plane having a circumference, the basal plane having a circumference and a center, the oblique line being the shortest line that links the circumference of the top plane and the circumference of the basal plane, an angle between the oblique line and a straight line that passes through the center and that is perpendicular to the incidence plane being ranged from 7.5° to 27° inclusive of 7.5° and 27°.

5. The optical element according to claim 4, wherein the angle is ranged from 10° to 15° inclusive of 10° and 15°.

6. The optical element according to claim 1, wherein the frustum is a conical frustum.

7. The optical element according to claim 1, wherein the frustum is a multiangularly pyramidal frustum.

8. The optical element according to claim 7, wherein the pyramidal frustum is a regular pyramidal frustum.

9. The optical element according to claim 8, wherein the regular pyramidal frustum has a basal plane, the number of sides of the basal plane being equal to or more than six.

10. The optical element according to claim 8, wherein the regular pyramidal frustum has a basal plane, the number of sides of the basal plane being equal to four.

11. The optical element according to claim 7, wherein the other side of the optical element is completely covered with the protrusions.

**12.** The optical element according to claim 11, wherein the number of kinds of the shape of the frustum is singular.

**13.** The optical element according to claim 11, wherein the number of kinds of the shape of the frustum is plural.

**14.** A planar lighting unit including a planar luminous element and an optical element, the planar luminous element having an exit plane from which light isotropically exits, the optical element being placed on the exit plane for gathering the light, **characterized in that** an incidence is plane formed on one side of the optical element for permitting the light to enter the optical element, **in that** the incidence plane faces the planar luminous element, **in that** a plurality of protrusions is formed on the other side of the optical element, and **in that** each protrusion has a shape of a frustum.

**15.** The planar lighting unit according to claim 14, wherein the frustum is a conical frustum.

**16.** The planar lighting unit according to claim 14, wherein the frustum is a muttiangularly pyramidal frustum.

**17.** The planar lighting unit according to claim 16, wherein the pyramidal frustum is a regular pyramidal frustum.

**18.** A planar luminous unit including a planar luminous element and an optical element, the planar luminous element having an exit plane from which light isotropically exits, the optical element being placed on the exit plane for gathering the light, **characterized in that** an incidence plane is formed on one side of the optical element for permitting the light to enter the optical element, **in that** the incidence plane faces the planar luminous element, **in that** a plurality of protrusions is formed on the other side of the optical element, and **in that** each protrusion has a shape of a frustum.

**19.** The planar luminous unit according to claim 18, wherein the frustum is a conical frustum.

**20.** The planar luminous unit according to claim 18, wherein the frustum is a muttiangutarty pyramidal frustum.

**21.** The planar luminous unit according to claim 20, wherein the pyramidal frustum is a regular pyramidal frustum.

**22.** The planar luminous unit according to claim 18, wherein the planar luminous element is an organic electroluminescent element.

**23.** The planer luminous unit according to claim 22, wherein the organic electroluminescent element is a bottom emission type.

**24.** A liquid crystal display unit including a backlight having a planar luminous element and an optical element, the planar luminous element having an exit plane from which light isotropically exits, the optical element being placed on the exit plane for gathering the light, **characterized in that** an incidence plane is formed on one side of the optical element for permitting the light to enter the optical element, **in that** the incidence plane faces the planar luminous element, **in that** a plurality of protrusions is formed on the other side of the optical element, **in that** each protrusion has a shape of a frustum, and **in that** a liquid crystal panel, through which the light reaches a user's eyes, is placed near the protrusions.

**25.** The liquid crystal display unit according to claim 24, wherein the frustum is a conical frustum.

**26.** The liquid crystal display unit according to claim 24, wherein the frustum is a multiangularly pyramidal frustum.

**27.** The liquid crystal display unit according to claim 26, wherein the pyramidal frustum is a regular pyramidal frustum.

# FIG. 1A

# FIG. 1B

# FIG. 1C

EP 1 426 790 A1

# FIG. 2

# FIG. 3

12

# FIG. 4

# FIG. 5

EP 1 426 790 A1

# FIG. 6 (PRIOR ART)

14

European Patent

Office

**EUROPEAN SEARCH REPORT**

Application Number

EP 03 02 7946

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN vol. 2002, no. 08, 5 August 2002 (2002-08-05) & JP 2002 107515 A (MATSUSHITA ELECTRIC IND CO LTD; NITTO JUSHI KOGYO KK), 10 April 2002 (2002-04-10) * abstract * | 1,14,18, 24 | G02B6/00 |
| P,A | EP 1 267 118 A (PROKIA TECHNOLOGY CO LTD) 18 December 2002 (2002-12-18) * abstract; figures 4-12 * | 1,14,18, 24 | |

TECHNICAL FIELDS
SEARCHED     (Int.Cl.7)

G02B

The present search report has been drawn up for all claims

| Place of search | Date of completion of the search | Examiner |
|---|---|---|
| The Hague | 11 March 2004 | Malic, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03 82 (P04C01)

EP 1 426 790 A1

**ANNEX TO THE EUROPEAN SEARCH REPORT
ON EUROPEAN PATENT APPLICATION NO.**                    EP 03 02 7946

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2004

| Patent document cited in search report | | Publication date | Patent family member(s) | | Publication date |
|---|---|---|---|---|---|
| JP 2002107515 | A | 10-04-2002 | NONE | | |
| EP 1267118 | A | 18-12-2002 | EP | 1267118 A1 | 18-12-2002 |

For more details about this annex : see Official Journal of the European Patent Office, No. 12/82